Europäisches Patentamt

European Patent Office

Office européen des brevets

(11) Veröffentlichungsnummer : **0 154 847**
**B1**

(12) **EUROPÄISCHE PATENTSCHRIFT**

(45) Veröffentlichungstag der Patentschrift :
17.05.89

(51) Int. Cl.⁴ : **G 02 B   6/00**

(21) Anmeldenummer : 85101814.3

(22) Anmeldetag : 20.02.85

(54) Anordnung zur Ausleuchtung von optischen oder optoelektronischen Strukturen.

(30) Priorität : 21.02.84 DE 3406191

(43) Veröffentlichungstag der Anmeldung :
18.09.85 Patentblatt 85/38

(45) Bekanntmachung des Hinweises auf die Patenterteilung : 17.05.89 Patentblatt 89/20

(84) Benannte Vertragsstaaten :
CH DE FR GB LI NL

(56) Entgegenhaltungen :
DE-A- 1 573 946
US-A- 2 604 005
PATENT ABSTRACTS OF JAPAN, Band 6, Nr. 148
(1026)[P-133], 7. August 1982; & JP - A - 57 68801 (FUJI
SHASHIN KOKI K.K.) 27.04.1982
IBM-TECHNICAL DISCLOSURE BULLETIN, Band 22,
Nr. 3, August 1979, Seiten 954-955, New York, US; S.E.
BOCZULAK "Document illumination system"
FUNKSCHAU-Heft 8/1983, pp. 57-59

(73) Patentinhaber : Schott Glaswerke
Hattenbergstrasse 10
D-6500 Mainz (DE)
CH DE FR LI NL
Carl-Zeiss-Stiftung trading as SCHOTT GLASWERKE
Hattenbergstrasse 10
D-6500 Mainz 1 (DE)
GB

(72) Erfinder : Vinz, Otmar, Dipl.-Phys.
Wilhelmstrasse 9
D-6228 Hattenheim/Rhg. (DE)
Erfinder : Kriege, Wolfgang, Dipl.-Ing.
Laubenheimer Strasse 33
D-6500 Mainz-Weisenau (DE)
Erfinder : Gehenn, Wolfram, Dr. Dipl.-Phys.
Sertoriusring 11
D-6500 Mainz-Finthen (DE)

(74) Vertreter : Schmitz, Waldemar, Dipl.-Phys. et al
Schmitz + Rasper, Patentanwälte Lessingstrasse 10
D-6200 Wiesbaden (DE)

## Beschreibung

Die Erfindung bezieht sich auf eine Anordnung zur gleichmäßigen Ausleuchtung von einer Anzahl von voneinander getrennten Elementen einer längsförmigen optoelektronischen Struktur unter Verwendung einer Lichtquelle, und eines die durch die Lichtquelle gelieferte Lichtintensität vergleichmäßigenden Lichtadapters, wobei die Lichtquelle über einen faseroptischen Querschnittswandler an den Lichtadapter angeschlossen ist.

In den Druckköpfen von optischen Drucksystemen werden Lichtschaltmodule aus beispielsweise optoelektronischen Halbleiterstrukturen verwendet, die gegenüber Laser-, LED-, LCD- und CRT-Druckern preiswerter und platzsparender hergestellt werden können. Diese Lichtschaltmodule bestehen aus einer Vielzahl von Lichtventilen oder Lichtschaltzellen aus magnetischen, optisch durchlässigen Schichten, die auf einem Substrat in Form von Inseln aufgetragen werden. Diese Inseln können beispielsweise zu einer sogenannten Lichtschaltzeile angeordnet sein. Da die Fläche dieser Inseln im $\mu m^2$-Bereich liegt, ist eine extrem hohe Druckauflösung zu erreichen. Durch elektrische Pulse wird die Magnetisierungsrichtung dieser Inseln verändert, was eine Änderung der Polarisationsebene des auftreffenden Lichtes zur Folge hat. Diese Inseln können damit auf « lichtdurchlässig » oder « lichtundurchlässig » geschaltet werden. (Funkschau Heft 8/1983, S.57 f.).

Überall dort, wo diese oder ähnliche optischen oder optoelektronischen Strukturen intensiv und-/oder gleichmäßig beleuchtet werden sollen, reicht die direkte Beleuchtung durch die Lichtquelle nicht aus. In der Funkschau, Heft 8/1983, Seiten 57-59 wird eine Anordnung zur Ausleuchtung solcher Halbleiterstrukturen beschrieben. Das Licht einer Lichtquelle wird über Glasfasern an einen aus einer planparallelen Glasplatte bestehenden Lichtadapter herangeführt, der der Halbleiterstruktur vorgeschaltet ist. Damit wird eine gleichmäßige Intensitätsverteilung längs dieses Lichtadapters erzielt.

Diese bekannte Anordnung hat jedoch den Nachteil, daß auch die aus technologischen Gründen notwendigen Zwischenräume zwischen solchen Halbleiterstrukturen beleuchtet werden. Durch diese unerwünschte Beleuchtung der nicht sensitiven Partien der Halbleiterstruktur können Erwärmungen der elektronischen Bauteile sowie Störlicht auftreten.

Da bei dieser bekannten Anordnung außerdem mit polarisiertem Licht gearbeitet wird, wodurch ohnehin Intensitätseinbußen in Kauf genommen werden müssen, möchte man auf die auf die nicht sensitiven Partien auftreffende Lichtintensität nicht verzichten.

Aus der US-PS 4 151 582 ist eine Vorrichtung bekannt, die zur exakten Ausleuchtung im Zusammenhang mit Mikrofilmen verwendet wird. Auf einer Trägerschicht ist eine transparente lichtführende Beschichtung aufgebracht, die das vom Rand her eingestrahlte Licht an definierten Stellen — nämlich regelmäßig angeordneten Bohrungen — unter Ausnutzung der Totalreflexion umlenkt und durch diese Bohrungen austreten läßt. Diese Vorrichtung hat jedoch den Nachteil, das das eingestrahlte Licht nicht vergleichmäßigt wird und daß die der Einstrahlseite benachbarten Bohrungen die meiste Intensität erhalten. Dadurch wird den dahinterliegenden Bohrungen Intensität weggenommen, so daß eine Ausleuchtung mit gleicher Lichtintensität nicht gewährleistet ist.

Außerdem muß zur Abstrahlung immer eine 90°-Umlenkung des Lichtes erfolgen.

Ziel der Erfindung ist deshalb eine Anordnung zur Ausleuchtung von optischen oder optoelektronischen Strukturen, wobei das von der Lichtquelle gelieferte Licht vergleichmäßigt und ohne Verluste ausschließlich auf die optischen bzw. optoelektronisch sensitiven Partien gelenkt wird.

Dieses Ziel wird erfindungsgemäß durch eine Anordnung erreicht, wie sie im kennzeichnenden Teil des Anspruchs 1 definiert ist.

In anderen Worten wird dieses Ziel dadurch erreicht, daß dem Lichtadapter unter Beibehaltung seiner ursprünglichen Funktion -nämlich der Vergleichmäßigung des Lichtes über eine ausgedehnte Fläche- eine ganz neue Funktion gegeben wird, indem dieser Lichtadapter derart ausgebildet ist, daß das durch die Lichtquelle gelieferte Licht durch Mehrfachreflexion vergleichmäßigt wird und die Lichtaustrittsfläche des Lichtadapters derart modifiziert ist, daß die Anordnung und die Gestalt der Austrittsflächen des Lichtes der Anordnung und der Gestalt der auszuleuchtenden optischen bzw. optoelektronischen Struktur entsprechen und daß das zugeführte Licht weitgehend ohne Verluste abgegeben wird.

Gemäß einer besonderen Ausführungsform ist die Lichtaustrittsseite des Lichtadapters derart verspiegelt, daß nur diese Austrittsflächen des Lichtes, die der Anordnung und Gestalt der auszuleuchtenden optischen oder optoelektronischen Halbleiterstruktur entsprechen, unverspiegelt geblieben sind.

Gemäß einer weiteren speziellen Ausführungsform werden an der Lichtaustrittsseite des Lichtadapters kegelstumpfförmige und/oder pyramidenstumpfförmige Lichtleiter derart angeordnet, daß die Deckflächen dieser Lichtleiter in Anordnung und Gestalt der auszuleuchtenden optischen oder optoelektronischen Struktur entsprechen. Diese Lichtleiter bestehen aus Hohl- und Vollkörpern, die verspiegelt oder totalreflektierend sind. Diese Lichtleiter können auch aus einer Kombination beider Ausführungsformen bestehen. Gegebenenfalls werden diese Lichtleiter gebogen an die auszuleuchtenden Strukturen herangeführt.

Um die Intensitätsverluste möglichst gering zu halten, ist der Lichtadapter totalreflektierend und-

/oder verspiegelt ausgeführt.

Beispielhafte Ausführungsformen werden nachfolgend unter Hinweis auf die Zeichnungen näher erläutert.

Es Zeigen :

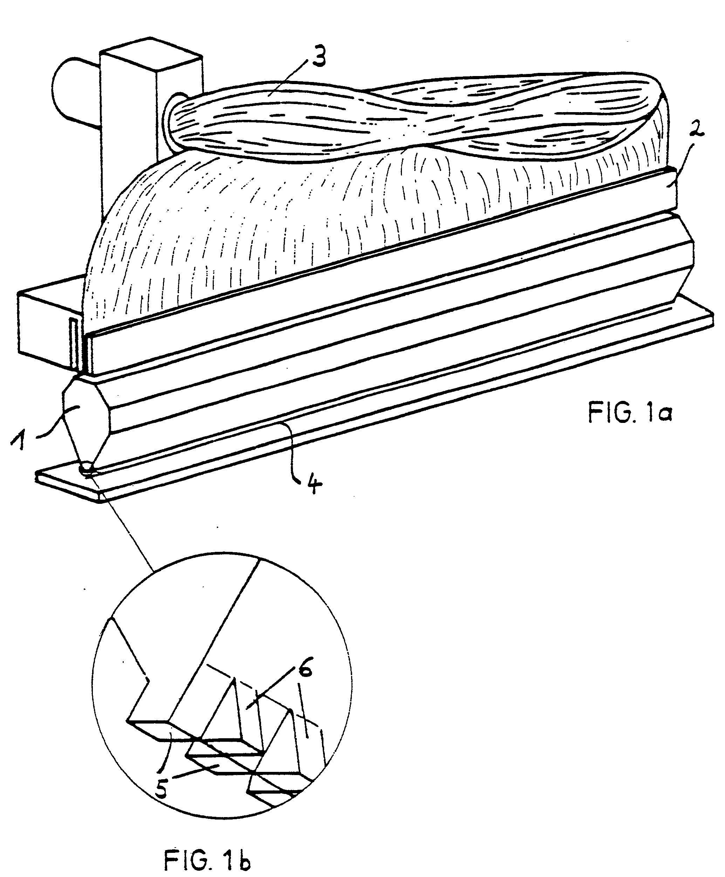

Fig. 1a eine perspektivische Ansicht des erfindungsgemäßen Lichtadapters mit entsprechenden Lichtzuführungen.

Fig. 1b eine perspektivische Ansicht der Lichtaustrittsseite des erfindungsgemäßen Lichtadapters.

Das von einer Lichtquelle (nicht dargestellt) gelieferte Licht wird über ein Glasfaserbündel 3 und einen faseroptischen Querschnittswandler 2 einem Lichtadapter 1 zugeführt (Fig. 1a). Dieser Lichtadapter 1 kann aus einem verspiegelten Hohlkörper oder Vollkörper bestehen. Durch die zwiebelförmige Gestalt des Lichtadapters 1 wird das ankommende Licht mehrfach reflektiert und auf diese Weise vergleichmäßigt. Dadurch wird erreicht, daß das an der Lichtaustrittsseite 5 austretende Licht an jeder Stelle der Lichtaustrittsseite die gleiche Intensität aufweist. Die Lichtaustrittsseite 5 (Fig. 1b) ist so ausgebildet, daß sie exakt der auszuleuchtenden optoelektronischen Struktur 4 entspricht, die in Figur la als Lichtschaltzeile dargestellt ist.

In der Figur 1b sind an der Lichtaustrittsseite des Lichtadapters 1 pyramidenstumpfförmige Lichtleiter 6 angeordnet. Die Deckflächen dieser Lichtleiter, die die Lichtaustrittsfläche bilden, entsprechen in Anordnung und Gestalt der auszuleuchtenden optischen oder optoelektronischen Struktur.

Gemäß einer anderen Ausführungsform ist die Lichtaustrittsseite des Lichtadapters derart verspiegelt, daß nur die Flächen dieser Austrittsseite, die der Anordnung und Gestalt der auszuleuchtenden getrennten Elemente der optoelektronischen Halbleiterstruktur entsprechen, unverspiegelt geblieben sind.

Der erfindungsgemäße Adapter bietet den Vorteil, daß das gesamte ankommende Licht vergleichmäßigt wird und ohne Verlust auf die auszuleuchtenden optoelektronischen Strukturen gelenkt wird.

## Patentansprüche

1. Anordnung zur gleichmäßigen Ausleuchtung von einer Anzahl von voneinander getrennten Elementen einer längsförmigen optoelektronischen Struktur (4) unter Verwendung einer Lichtquelle und eines die durch die Lichtquelle gelieferte Lichtintensität vergleichmäßigenden Lichtadapters (1), wobei die Lichtquelle über einen faseroptischen Querschnittswandler (2) an den Lichtadapter (1) angeschlossen ist, dadurch gekennzeichnet, daß der Lichtadapter (1) eine längliche Form und einen zwiebelförmigen Querschnitt aufweist, und daß der Lichtadapter (1) an seiner längsförmigen Lichtaustrittsseite (5) eine Anzahl von voneinander getrennten Lichtaustrittsflächen (5) aufweist, deren Gestalt und Anordnung der der auszuleuchtenden getrennten Elemente der optoelektronischen Struktur (4) entsprechen, so daß das Licht ausschließlich auf diese Elemente abgegeben wird.

2. Anordnung nach Anspruch 1, dadurch gekennzeichnet, daß die Lichtaustrittsseite (5) des Lichtadapters (1) derart verspiegelt ist, daß nur die Flächen dieser Austrittsseite (5), die der Anordnung und Gestalt der auszuleuchtenden getrennten Elemente der optoelektronischen Struktur (4) entsprechen, unverspiegelt geblieben sind.

3. Anordnung nach Anspruch 1, dadurch gekennzeichnet, daß an der Lichtaustrittsseite des Lichtadapters (1) kegelstumpfförmige und/oder pyramidenstumpfförmige Lichtleiter (6) derart angeordnet sind, dan die Deckflächen dieser Lichtleiter in Anordnung und Gestalt der auszuleuchtenden getrennten Elemente der optoelektronischen Struktur (4) entsprechen.

4. Anordnung nach Anspruch 3, dadurch gekennzeichnet, daß diese Lichtleiter (6) aus verspiegelten Hohlkörpern und/oder totalreflektierenden und/oder verspiegelten Vollkörpern bestehen.

5. Anordnung nach einem der Ansprüche 1 bis 4, dadurch gekennzeichnet, daß dieser Lichtadapter (1) verspiegelt und/oder totalreflektierend ausgeführt ist.

## Claims

1. Arrangement for evenly illuminating a quantity of elements being separated from each other of an oblong optoelectronic structure (4) by using a light source and a light adapter (1) which equalizes the luminous intensity being supplied by the light source, said light source being connected to the light adapter (1) by means of a fiberoptical section converter (2) characterized in that the light adapter (1) shows an oblong shape and a bulbiform cross-section and that the light adapter (1), at its oblong light-emergence side (5), shows a quantity of light-emergence areas (5) being separated from each other, the shape and arrangement of which corresponding to that of the seperated elements of the optoelectronic structure which have to be illuminated, so that the light is released to these elements exclusively.

2. Arrangement according to claim 1, characterized in that the light-emergence side (5) of the light adapter (1) is metalcoated in such a manner that only that areas of the emergence side (5) have remained uncoated which correspond to the arrangement and shape of the seperated elements of the optoelectronic structure which have to be illuminated.

3. Arrangement according to claim 1, characterized in that at the light-emergence side of the light adapter (1) light conductors of the shape of a truncated cone and/or truncated pyramid are arranged in such a manner, that with regards to arrangement and shape, the upper surfaces of these light conductors correspond to the seperated elements which have to be illuminated.

4. Arrangement according to claim 3, characterized in that the light conductors (6) consist of metal coated hollow bodies and/or totally reflecting and/or metal coated solid bodies.

5. Arrangement according to one of the claims 1 through 4, characterized in that this light adapter (1) is made metal coated and/or totally reflecting.

## Revendications

1. Arrangement d'illumination égale d'une quantité d'éléments séparés l'un de l'autre et d'une structure oblongue et optoélectronique (4) en utilisant une source lumineuse et un adaptateur de lumière (1) qui égalise l'intensité lumineuse fournie par la source lumineuse, la source lumineuse étant raccordée à l'adaptateur de lumière (1) au moyen d'un convertisseur de section à fibres optiques, caractérisé en ce que l'adaptateur de lumière (1) montre une forme oblongue et une section bulbiforme et que l'adaptateur de lumière (1), à son côté oblongue pour la sortie de lumière (5), montre une quantité de surfaces pour la sortie de lumière (5) séparées l'une de l'autre, la forme et l'arrangement desquelles correspondant à ceux des éléments séparés de la structure optoélectronique qu'il faut éclairer, tellement, que la lumière est dégagée de ces éléments exclusivement.

2. Arrangement selon la revendication 1, caractérisé en ce que le côté pour la sortie de lumière (5) de l'adaptateur de lumière (1) est munie d'une couche réfléchissante de la manière que seulement les surfaces de ce côté de sortie (5) sont restées sans couche réfléchissante, qui correspondent à l'arrangement et à la forme des éléments séparés de la structure optoélectronique (4).

3. Arrangement selon la revendication 1, caractérisé en ce que des guides de lumière en forme de cône tronqué et/ou de pyramide tronquée (6) sont arrangés au côté pour la sortie de lumière de l'adaptateur de lumière (1) de telle manière que les surfaces effectives de ces guides de lumière correspondent à la structure optoélectronique (4) concernant l'arrangement et la forme des éléments séparés qu'il faut éclairer.

4. Arrangement selon la revendication 3, caractérisé en ce que ces guides de lumière (6) se composent de corps creux appliqués d'une couche réfléchissante et/ou de corps solides réfléchissant totalement et/ou appliqués d'une couche réfléchissante.

5. Arrangement selon une des revendications 1 à 4, caractérisé en ce que cet adaptateur de lumière (1) est exécuté par application d'une couche réfléchissante et/ou à réflection totale.

FIG. 1a

FIG. 1b